# EUROPÄISCHE PATENTSCHRIFT

(11) **EP 2 406 526 B1**
(45) Veröffentlichungstag und Bekanntmachung des Hinweises auf die Patenterteilung: **16.01.2013**
(21) Anmeldenummer: 10708179.6
(22) Anmeldetag: 04.03.2010
(51) Int. Cl.: F16H 57/08

(54) **PLANETENTRÄGER AUS BLECH UND PLANETENRADEINHEIT MIT MINDESTENS EINEM PLANETENTRÄGER AUS BLECH**
PLANET CARRIER OF SHEET METAL AND PLANETARY GEAR UNIT WITH AT LEAST ONE PLANET CARRIER OF SHEET METAL
PORTE-SATELLITE EN TÔLE ET UNITÉ DE SATELLITES COMPORTANT AU MOINS UN PORTE-SATELLITE EN TÔLE

(30) Priorität: 14.03.2009 DE 102009013295
(43) Veröffentlichungstag der Anmeldung: 18.01.2012
(73) Patentinhaber: Schaeffler Technologies AG & Co. KG, 91074 Herzogenaurach (DE)
(72) Erfinder: BIERMANN, Thorsten, 96193 Wachenroth (DE); PIRCHER, Thomas, 91233 Neunkirchen a. S. (DE)
(86) Internationale Anmeldenummer: PCT/EP2010/052743
(87) Internationale Veröffentlichungsnummer: WO 2010/105914

(56) Entgegenhaltungen:
- WO-A1-2005/015056
- DE-A1- 3 637 299
- DE-U1-202006 016 324

## Beschreibung

### Gebiet der Erfindung

Die Erfindung betrifft einen Planetenträger aus Blech mit wenigstens einem Sitz in Form eines axial gerichteten Loches in dem Planetenträger zur Aufnahme eines Planetenbolzens.

### Hintergrund der Erfindung

DE 25 03 518 A1 zeigt eine Planetenradeinheit, die aus einem Planetenträger, einem Korb, Planetenbolzen sowie Planetenrädern und deren Lagerung gebildet ist. Der Planetenträger und der Korb liegen sich axial einander mit Abstand gegenüber. Zwischen den Planetenträgern sitzen die Planetenräder auf jeweils einem Planetenbolzen. Die Planetenbolzen sind beidseitig und somit auf der einen Seite im Planetenträger und auf der anderen Seite im Korb in jeweils einem Sitz abgestützt. Es gibt auch Planetenradeinheiten, bei denen anstelle des Korbes ein weiterer Planetenträger verwendet wird oder in denen die Planetenbolzen einseitig an nur einem Planetenträger aufgenommen sind.

Im Folgenden sind unter dem Begriff "Planetenträger" alle Bauteile zu verstehen, die scheiben-, topf- oder stegförmig mit beliebigem Umriss ausgebildet sind und die geeignet sind, Planetenbolzen mit Planetenrädern aufzunehmen.

Die Planetenträger nach DE 25 03 518 A1 sind aus Blech hergestellt. Diese Ausführungen sind einfach und kostengünstig insbesondere in der Massenproduktion herstellbar. Als nachteilig wird häufig die geringe Stabilität insbesondere die geringe Verwindungssteifigkeit der Blechkonstruktion bei Belastungen durch hohe Drehmomente eingeschätzt. Planetenradeinheiten für Planetengetriebe, die mit höheren Drehmomenten belastet werden, müssen mit entsprechend dicken Blechen oder mit Verstärkungen versehen werden. Der damit verbundene höhere Materialeinsatz, die höheren Kosten zur Herstellung sowie der erhöhte Fertigungsaufwand können die Vorteile von Blechkonstruktionen somit zumindest wieder teilweise aufheben. Für Planetenträger aus dickeren Blech wird auch mehr Bauraum benötigt. Dies führt dazu, dass die Planetenradeinheit insgesamt breiter wird. Außerdem wird die Einheit schwerer.

In DE 35 42 622 C2 ist dazu ausgeführt: "Bei einem in seinem Grundaufbau im Wesentlichen unverändert bleibenden Planetenräderwechselgetriebe eines Kraftfahrzeuges, das an eine höhere Drehmomentübertragungskapazität angepasst werden musste, wurde dies durch eine entsprechende Verstärkung der Bauteile erreicht." In DE 35 42 622 C2 wird deshalb vorgeschlagen, *diesen aus Sintermetall herzustellen.* Die Herstellkosten für Planetenträger aus Sintermetall, insbesondere die für Werkzeuge, sind jedoch relativ hoch.

Der Planetenbolzen wird in einen Sitz des Planetenträgers gesteckt oder gepresst und beispielsweise durch Verstemmen gesichert. Der Sitz eines Planetenbolzens im Planetenträger nach dem Stand der Technik ist in der Regel ein in das Blech des Planetenträger gestanztes axiales Durchgangsloch, dessen Abmessungen radial durch die Abmessungen des Planetenbolzens und axial durch die Dicke des gewählten Bleches vorgegeben sind. Die Zahl der Sitze und damit der Löcher im Planetenträger richtet sich nach der Anzahl der Planetenbolzen und der Planetenräder, die an dem Planetenträger gelagert sind und ist selten zwei, häufig drei und geht oft auch über diese Anzahl hinaus.

Die Sitze und die Materialien in der Umgebung der Sitze sind aufgrund von Reaktionskräften an dem Planetenrad hohen Belastungen ausgesetzt. Außerdem könnte bei der Wahl von zu dünnem Blech und damit bei zu geringer axialer Abmessung ein sicherer verkippungsfreier Sitz und eine sichere Ausrichtung des Planetenbolzens im Planetenträger von vornherein nur mit erhöhtem Aufwand erzielt werden. Die Dicke des zur Herstellung des Planetenträgers gewählten Bleches ist oftmals primär von den erforderlichen Abmessungen für den Sitz der Planetenbolzen bestimmt, so dass die gesamte Blechkonstruktion des Planetenträgers aufgrund des deshalb gewählten dickeren Bleches ansonsten überdimensioniert sein kann.

An einem Planetenträger nach DE 35 42 622 C2 sind die Ränder der Sitze deshalb mit einer wulstartigen Materialanhäufung aus Sintermetall verstärkt. Durch diese Materialanhäufung aus dem Material des Planetenträgers können die axialen Abmessungen des Sitzes im Vergleich zur der axialen Dickes des umgebenden Wandabschnitts so vergrößert werden, dass dieser axial aus dem Material des Planetenträgers hervorsteht. Eine sichere Führung und bessere Abstützung ist sicherstellt. Für die Verlängerung des Sitzes wird jedoch axialer Bauraum benötigt, unabhängig davon, ob diese Verlängerung axial aus dem Planetenträger in Richtung des jeweiligen Planetenrades oder in die andere Richtung hervorsteht. Die axialen Abmessungen (Breite) der Planetenradeinheit werden größer und es wird nachteilig mehr Bauraum benötigt. Außerdem müssen Funktionsflächen an Planetenträgern aus Sintermetall nach der Formgebung zusätzlich spanabhebend bearbeitet werden.

*Die gattungsgemäße* WO2005015056A1 *zeigt eine Planetenradeinheit mit einem Planetenträger aus Blech, an dem Planetenbolzen aufgenommen sind. Die Planetenbolzen sitzen jeweils in einem Sitz, der aus dem Planetenträger geformt ist und ein axial gerichteten Loches in dem Planetenträger zur Aufnahme eines Planetenbolzens aufweist. Der Sitz ist an einen Abschnitt ausgebildet, welcher zumindest teilweise aus einem plastisch aus dem Blech des Planetenträgers verdrängten Anteil des Blechmaterials des Blechs gebildet ist und welcher axial über die Blechdicke des Blechs hinaus verlängert axial mit der Bolzenachse des Planetenbolzens und mit dem Planetenbolzen gleichgerichtet aus dem Planetenträger hervorsteht. Hier gilt wie beim vorgenannten Beispiel, dass für die Verlängerung des Sitzes jedoch axialer Bauraum benötigt wird, weil diese Verlängerung axial aus dem Planetenträger in Richtung des jeweiligen Planetenrades hervorsteht.*

### Aufgabe der Erfindung

Planetenradeinheiten, deren Planetenträger aus Blech gefertigt sind, setzen sich unabhängig von den zuvor beschriebenen Nachteilen gegenüber Planetenträgern aus Sintermetall oder Guss zunehmend durch. Da die Planetenträger aus Blech insbesondere durch Kaltumformen wie Feinstanzen, Ziehen, Prägen und Kalibrieren in ihren Abmessungen sehr genau und mit hoher Qualität ihrer Funktionsflächen hergestellt werden können, kann kostenintensive spanabhebende Nachbearbeitung wie Bohren, Drehen oder Schleifen entfallen. Die Aufgabe der Erfindung ist es daher, Planetenträger und Planetenradeinheiten der gattungsbildenden Art zu schaffen, mit denen die zuvor beschriebenen Nachteile vermieden werden.

### Beschreibung der Erfindung

Die Aufgabe ist nach dem Gegenstand des Anspruchs 1 gelöst.

*Der* Planetenträger ist aus Blech und *weist* einen verlängerten Sitz in Form eines axial gerichteten Loches zur Aufnahme des Planetenbolzens auf. *Zumindest ein Abschnitt des* Sitzes ist teilweise aus plastisch aus dem Blech des Planetenträgers verformten Materials *gebildet,* welcher axial über die Blechdicke des Bleches verlängert hinaus steht. Durch den plastisch verdrängten oder gestreckten bzw. gestauchten Anteil des Blechmaterials ist ein Abschnitt gebildet, der axial mit der Bolzenachse des Planetenbolzens gleichgerichtet aus dem Planetenträger hervorsteht.

Das axialgerichtete Loch im Planetenträger für den Sitz ist zumeist innenzylindrisch ausgebildet und kann alternativ dazu auch zumindest abschnittsweise oder durchgängig andere Querschnittsformen als die zylindrische aufweisen. Das Loch kann axial durchgängig die gleichen Innenabmessungen aufweisen oder abgestuft sein. So ist es denkbar, dass der Durchmesser des Abschnitts innen geringer ist als der Durchmesser des Sitzes im Planetenträger selbst oder umgekehrt.

Der Abschnitt ist zumindest teilweise mittels Kaltumformen wie Ziehen, Durchstellen, Prägen, Fließpressen oder Rollieren erzeugt. Das Material wird entweder zur Erzeugung des Loches für den Sitz und/oder aus der Umgebung des Sitzes unter Reduzierung der Ausgangsblechdicke oder Umformen von Materialanhäufungen wie beispielsweise das Umformen von vorher eingebrachten Sicken plastisch verdrängt oder verformt.

Als Material für das Blech, aus dem der Planetenträger gestaltet ist, ist bevorzugt kaltformbarer Stahl. Der Sitz kann durch das Kaltumformen so präzise hergestellt werden, dass keine spanabhebende Nacharbeit des Loches erforderlich ist. Die Herstellung des Sitzes ist in die Fertigung des Planetenträgers integrierbar, so dass kein zusätzlicher Aufwand, wie dieser beispielsweise beim Anbringen von Verstärkungen entsteht, betrieben werden muss.

Für die Herstellung des Planetenträgers kann Blech von der Materialstärke gewählt werden, die für die Festigkeit der Blechkonstruktion notwendig ist. Die Abmessungen des Bleches sind nicht mehr notwendigerweise von den Auslegungskriterium für einen sicheren Sitz der Planetenbolzen abhängig.

Der Abschnitt steht gemäß einer Vorzugsvariante an der Seite des Planetenträgers axial ab, von der aus der Planetenbolzen abgeht und an der sich somit das auf dem Bolzen sitzende Planetenrad anschließt. Alternativ kann der Abschnitt auch in die andere axiale Richtung gerichtet sein. Die Vorzugsvariante beansprucht jedoch dann weniger Bauraum, wenn der Abschnitt zumindest teilweise in eine konzentrisch zur Bolzenachse ausgebildete Lagerbohrung des Planetenrades axial eintaucht - oder zumindest in das Loch einer zwischen dem Planetenrad und dem Träger angeordneten Axialanlaufscheibe eintaucht oder durch diese hindurch gesteckt ist.

Der Abschnitt weist außen eine Außenkontur auf, die der vorzugsweise innenzylindrischen Lagerbohrung im Planetenrad entsprechend angepasst ist, so dass dieser ohne das Planetenrad zu berühren in die Lagerbohrung eintaucht. So kann der Abschnitt außen zylindrisch oder konisch ausgebildet sein. Die axialen Abmessungen der Planetenradeinheit sind zumindest von dem Maß unbeeinflusst, um das der Abschnitt axial in die Lagerbohrung hinein und durch die Axialanlaufscheibe hindurch geführt ist. Die Breite der Planetenradeinheit ist demnach von der erfindungsgemäßen Maßnahme unbeeinflusst.

Eine weitere Ausgestaltung der Erfindung sieht vor, dass der Planetenbolzen mindestens in einen Schaft und in einen außenzylindrischen Lagersitz eingeteilt ist. Mit dem Schaft sitzt der Planetenbolzen in dem Sitz des Planetenträgers. Auf der Mantelfläche des außenzylindrischen Lagersitzes ist das Planetenrad gelagert. Der Schaft ist vorzugsweise auch außenzylindrisch kann aber auch beliebige Querschnittsformen aufweisen.

Der Schaft und der außenzylindrische Abschnitt können zueinander unterschiedliche Durchmesser aufweisen. So weist beispielsweise der Schaft einen kleineren Durchmesser auf als der Lagersitz. Die zwischen dem Schaft und dem Lagersitz ausgebildete Schulter kann in Form eines Wellenabsatzes eine oder mehr kreisringförmige, konische oder beliebig anders gestaltete Flächen aufweisen. Die Schulter ist, wie eine Ausgestaltung der Erfindung vorsieht, ein axialer Anschlag für den Planetenbolzen gegen den Planetenträger. Ein derartiger Anschlag unterstützt beispielsweise die axiale Positionierung des Planetenbolzen zum Planetenträger bei der Montage des Planetenbolzens in den Planetenträger. Des weiteren können über diesen Axialanschlag Belastungen entlastend an die Umgebung des Sitzes verteilt werden.

### Beschreibung der Zeichnung

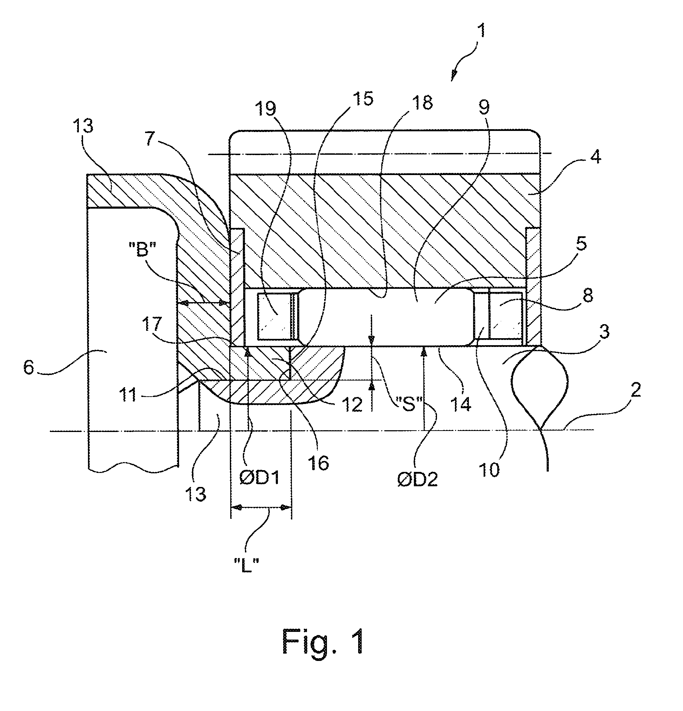

Die Erfindung wird nachfolgend anhand eines Ausführungsbeispieles näher erläutert. Figur 1 zeigt ein Detail einer Planetenradeinheit 1 in einem Längsschnitt entlang einer Bolzenachse 2 eines Planetenbolzens 3. Die Planetenradeinheit 1 ist aus mindestens drei Planetenrädern 4, von denen nur eines dargestellt ist und von denen jedes jeweils mittels eines Wälzlagers 5 auf einem Planetenbolzen 3 um die Bolzenachse 2 drehbar gelagert ist, und aus einem Planetenträger 6 gebildet. Es ist auch denkbar, dass mehr als ein Planetenrad auf einem Planetenbolzen angeordnet ist. Das Planetenrad 4 ist zur Bolzenachse 2 rotationssymmetrisch. Es ist auch denkbar, dass der Planetenbolzen 3 beidseitig jeweils in einem Planetenträger sitzt. Der Planetenbolzen 3 ist in Figur 1 verkürzt dargestellt. Zwischen dem Planetenrad 4 und dem Planetenträger 6 ist eine Axialanlaufscheibe 7 angeordnet. Das Wälzlager 5 ist aus einem konzentrisch zur Bolzenachse 2 angeordneten Käfig 8 und aus Wälzkörpern 9 in Form von Rollen oder Nadeln gebildet. Alternativ kann das Lager zur Lagerung des Planetenrades 4 auf dem Planetenbolzen 3 auch ein Gleitlager oder ein Wälzlager mit zwei Reihen Wälzkörpern sein. Der Käfig 8 weist mehrere umfangsseitig zueinander benachbarte Käfigtaschen 10 auf, in denen jeweils einer der Wälzkörper 9 angeordnet ist.

Der Planetenträger 6 ist aus Blech gefertigt und weist außen einen radial umlaufenden Rand 13 auf, mit dem der Planetenträger 6 stabilisiert ist. Der Sitz 11 des Planetenbolzens 3 ist plastisch aus dem Blech des Planetenträgers 6 zu einem hohlzylindrischen Abschnitt 12 geformt, der zumindest außen auch konisch ausgebildet oder mit beliebigem anderen Querschnitt versehen sein kann. Der Sitz 11 selbst weist ein zylindrisches Loch auf, das sich durch die Wand des Planetenträgers und durch den Abschnitt hindurch erstreckt und sich an einem Ende aufgrund einer umformtechnologisch bedingten verrundeten Fase trichterförmig erweitert. Die Länge "L" des zylindrischen Loches ist größer als die Breite "B" des Bleches, das sich unmittelbar an den Sitz 11 anschließt. Die radiale Wandstärke "S" des hohlzylindrisch ausgebildeten Abschnittes ist geringer als die Breite "B".

Der Planetenbolzen 3 sitzt mit einem Schaft 13 in dem Sitz 11 des Planetenträgers 6. Der Schaft 13 ist in diesem Fall außenzylindrisch gestaltet, könnte aber auch beispielsweise flach mit parallelen Schlüsselflächen oder als Vier- bzw. Sechskant ausgebildet sein. Das Loch des Sitzes weist in jedem Fall einen dem Querschnitt des Schaftes angepassten Querschnitt zur Absicherung eines Pass- oder Presssitzes des Schaftes in dem Loch auf. Der Sitz des Planetenbolzens kann wahlweise mittels Form- und/oder Stoffschluss und mittels zusätzlicher Sicherungselemente wie Sicherungsringen- bzw. Stiften oder Schraubelementen gesichert werden.

Der Planetenbolzen 3 weist weiterhin eine außenzylindrische Mantelfläche 14 als Lagersitz auf, deren radiale Abmessungen (beispielsweise der Außendurchmesser) denen des Schaftes entsprechen können. In der mit Figur 1 dargestellten Variante ist jedoch der Durchmesser des Schaftes geringer als der Durchmesser der zylindrischen Mantelfläche 14. Die Mantelfläche 14 ist eine laufbahn für die Wälzkörper 9. Die Mantelfläche 14 und der Schaft 13 sind mit einer Schulter 15 in Form einer Kreisringfläche 16 zur Bildung eines Wellenabsatzes verbunden. Die Kreisringfläche 16 ist ein Anschlag für den Abschnitt 12. Bei der Montage des Planetenbolzens 3 an den Planetenträger 6 wird der Planetenbolzen 3 solange axial in den Sitz 11 geschoben, bis die Kreisringfläche 16 an dem Abschnitt 12 anschlägt und so die genaue Lage des Planetenbolzens 3 im in der Planetenradeinheit 1 abgesichert ist Außerdem wirken Abschnitt 12 und Kreisringfläche 16 so aneinander, dass aus hohen Drehmomenten resultierende Verformungskräfte am Planetenbolzen 3 über die Stirnseite des Abschnittes 12 in den Planetenträger 6 eingeleitet werden können.

An der fertig montierten Planetenradeinheit 1 greift der Abschnitt 12 axial durch das Durchgangsloch 17 der lochförmig ausgebildeten Axialanlaufscheibe 7 hindurch und taucht außerdem axial in die innenzylindrisch ausgebildete Lagerbohrung 18 des Planetenrades 4 und in den Käfig 8 ein. Die Axialanlaufscheibe 7 und Abschnitte des Planetenrades 4 sowie des Käfigs 8 und der Abschnitt 12 sind konzentrisch bezogen auf die Bolzenachse 2. Damit ist die Gesamtbreite der Planetenradeinheit 1 in axialer Richtung von dem zusätzlich aus dem Planetenträger 6 heraus stehenden Abschnitt 12 vorteilhaft nicht beeinflusst, so dass kein zusätzlicher Bauraum benötigt wird.

Der Außendurchmesser "D1" des Abschnitts 12 entspricht dem Außendurchmesser "D2" der zylindrischen Mantelfläche 14, so dass auch der radial durch die Planetenradeinheit 1 beanspruchte Bauraum von den Abmessungen des Abschnitts 12 vorteilhaft unbeeinflusst ist. Außerdem ist mit dieser Auslegung abgesichert, dass ein Seitenrand 19 des Käfigs 8 den Abschnitt 12 berührungslos umgreifen kann.

### Bezugszeichen

- 1: Planetenradeinheit
- 2: Bolzenachse
- 3: Planetenbolzen
- 4: Planetenrad
- 5: Wälzlager
- 6: Planetenträger
- 7: Axialanlaufscheibe
- 8: Käfig
- 9: Wälzkörper
- 10: Käfigtasche
- 11: Sitz
- 12: Abschnitt
- 13: Schaft
- 14: Mantelfläche
- 15: Schulter
- 16: Kreisringfläche
- 17: Durchgangsloch
- 18: Lagerbohrung
- 19: Seitenrand

## Patentansprüche

1. Planetenträger (6) aus Blech mit wenigstens einem Sitz (11) in Form eines axial gerichteten Loches in dem Planetenträger (6) zur Aufnahme eines Planetenbolzens (3) *wobei* der Sitz (11) *einen Abschnitt aufweist, welcher* zumindest teilweise aus *einem* plastisch aus dem Blech des Planetenträgers (6) verdrängten *Anteil des Blechmaterials des Blechs gebildet ist und welcher* axial über die Blechdicke des Blechs hinaus verlängert axial mit der Bolzenachse (2) des Planetenbolzens (3) *und mit* dem Planetenbolzen gleichgerichtet aus dem Planetenträger (6) hervorsteht, *wobei Abschnitt (12) zumindest teilweise hohlzylindrisch ausgebildet ist und **dadurch gekennzeichnet, dass** einen Außenalurchmesser im Nennmaß aufweist, der höchstens so groß ist wie der größte Außendurchmesser im Nennmaß des Planetenbolzens (3).*

2. Planetenradeinheit (1) aus wenigstens einem Planetenträger (6) nach Anspruch 1 und mit mindestens einem innen in dem Sitz (11) des Planetenträgers (6) sitzenden Planetenbolzen (3) sowie mit zumindest einem auf dem Planetenbolzen (3) drehbar gelagerten Planetenrad, **dadurch gekennzeichnet, dass** der Abschnitt des Sitzes (11) an der Seite des Planetenträgers (6) hervorsteht, an der das Planetenrad (4) auf dem Planetenbolzen (3) gelagert ist.

3. Planetenradeinheit (1) nach Anspruch 2, **dadurch gekennzeichnet, dass** zumindest ein axialer Teilabschnitt des Abschnittes (12) radial-umfangsseitig von dem Planetenrad (4) umgeben ist.

4. Planetenradeinheit (1) mit einer Axialanlaufscheibe (7) zwischen dem Planetenträger (6) und dem Planetenrad (4) nach Anspruch 1, **dadurch gekennzeichnet, dass** der Abschnitt (12) axial zumindest in das axial gerichtete Durchgangsloch (17) der Axialanlaufscheibe (7) eingreift.

5. Planetenradeinheit nach Anspruch 4, **dadurch gekennzeichnet, dass** zumindest ein axialer Teilabschnitt des Abschnittes radial-umfangsseitig von der Axialanlaufscheibe (7) und von dem Planetenrad (4) umgeben ist.

6. Planetenradeinheit nach Anspruch 2, **dadurch gekennzeichnet, dass** der Planetenbolzen (3) einen Schaft (13) aufweist, mit dem der Planetenbolzen (3) zumindest teilweise in dem Sitz (11) des Planetenträgers (6) sitzt und dass das Planetenrad (4) mittels wenigstens einer Planetenlagerung auf einer außenzylindrischen Mantelfläche (14) des Planetenbolzens (3) gelagert ist, die größere radiale Abmessungen aufweist als der Schaft (13), wobei der Schaft (13) und die Mantelfläche (14) mit einer Schulter (15) miteinander verbunden sind und dabei der Planetenbolzen (3) mit der Schulter (15) axial an dem Abschnitt (12) angeschlagen ist.

## Claims

1. Planet carrier (6) of sheet metal, with at least one seat (11) in the form of an axially directed hole in the planet carrier (6) for receiving a planet bolt (3), the seat (11) having a portion which is formed at least partially from a fraction, displaced plastically out of the sheet metal of the planet carrier (6), of the sheet metal material of the sheet metal and which, prolonged axially beyond the sheet metal thickness of the sheet metal, projects out of the planet carrier (6) axially codirectionally with the bolt axis (2) of the planet bolt (3) and with the planet bolt, the portion (12) being designed to be at least partially hollow-cylindrical, **characterized in that** the portion (12) has an outside diameter in nominal dimension which is at most as large as the maximum outside diameter in nominal dimension of the planet bolt (3).

2. Planetary gear unit (1) consisting of at least one planet carrier (6) according to Claim 1 and with at least one planet bolt (3) seated internally in the seat (11) of the planet carrier (6) and also with at least one planetary gear mounted rotatably on the planet bolt (3), **characterized in that** the portion of the seat (11) projects on that side of the planet carrier (6) on which the planetary gear (4) is mounted on the planet bolt (3).

3. Planetary gear unit (1) according to Claim 2, **characterized in that** at least one axial subsection of the portion (12) is surrounded radially on the circumference by the planetary gear (4).

4. Planetary gear unit (1) with an axial run-on disc (7) between the planet carrier (6) and the planetary gear (4) according to Claim 1, **characterized in that** the portion (12) engages axially at least into the axially directed through hole (17) of the axial run-on disc (7).

5. Planetary gear unit according Claim 4, **characterized in that** at least one axial subsection of the portion is surrounded radially on the circumference by the axial run-on disc (7) and by the planetary gear (4).

6. Planetary gear unit according to Claim 2, **characterized in that** the planet bolt (3) has a shank (13), by means of which the planet bolt (3) is seated at least partially in the seat (11) of the planet carrier (6), and **in that** the planetary gear (4) is mounted by means of at least one planet mounting on an outer-cylindrical surface area (14) of the planet bolt (3), which surface area has larger radial dimensions than the shank (13), the shank (13) and the surface area (14) being connected to one another by means of a shoulder (15) and at the same time the planet bolt (3) being fastened axially to the portion (12) by means of the shoulder (15).

## Revendications

1. Porte-satellites (6) en tôle comprenant au moins un siège (11) en forme de trou orienté axialement dans le porte-satellites (6), pour recevoir un boulon de satellite (3), le siège (11) présentant une portion qui est formée au moins en partie par une portion du matériau de la tôle repoussée plastiquement hors de la tôle du porte-satellites (6) et qui fait saillie hors du porte-satellites (6) axialement au-delà de l'épaisseur de la tôle de manière prolongée axialement avec l'axe de boulon (2) du boulon de satellite (3) et orienté dans le même sens que le boulon de satellite, la portion (12) étant réalisée de manière au moins partiellement cylindrique creuse et **caractérisé en ce que** la portion (12) présente un diamètre extérieur de dimension nominale qui est au plus aussi grand que le diamètre extérieur maximum du boulon de satellite (3) en dimension nominale.

2. Unité d'engrenage planétaire (1) constituée d'au moins un porte-satellites (6) selon la revendication 1, et comprenant au moins un boulon de satellite (3) reposant dans le siège (11) du porte-satellites (6) ainsi qu'au moins un satellite monté rotatif sur le boulon de satellite (3), **caractérisée en ce que** la portion du siège (11) fait saillie sur le côté du porte-satellites (6) contre lequel le satellite (4) est monté sur le boulon de satellite (3).

3. Unité d'engrenage planétaire (1) selon la revendication 2, **caractérisée en ce qu'**au moins une portion partielle axiale de la portion (12) est entourée radialement du côté de la périphérie par le satellite (4).

4. Unité d'engrenage planétaire (1) comprenant un disque de butée axial (7) entre le porte-satellites (6) et le satellite (4) selon la revendication 1, **caractérisée en ce que** la portion (12) vient en prise axialement au moins dans le trou de passage orienté axialement (17) du disque de butée axial (7).

5. Unité d'engrenage planétaire selon la revendication 4, **caractérisée en ce qu'**au moins une portion partielle axiale de la portion est entourée radialement du côté de à périphérie par le disque de butée axial (7) et par le satellite (4).

6. Unité d'engrenage planétaire selon la revendication 2, **caractérisée en ce que** le boulon de satellite (3) présente un arbre (13) avec lequel le boulon de satellite (3) repose au moins en partie dans le siège (11) du porte-satellites (6) et **en ce que** le satellite (4) est monté au moyen d'au moins un palier de support de satellite sur une surface d'enveloppe cylindrique extérieure (14) du boulon de satellite (3) qui présente des dimensions radiales supérieures à celles de l'arbre (13), l'arbre (13) et la surface d'enveloppe (14) étant reliés l'un à l'autre au moyen d'un épaulement (15) et le boulon de satellite (3) étant ainsi amené en butée contre la portion (12) axialement au moyen de l'épaulement (15).
